# EUROPÄISCHE PATENTANMELDUNG

(11) **EP 2 196 659 A1**
(43) Veröffentlichungstag der Anmeldung: **16.06.2010**
(21) Anmeldenummer: 08171209.3
(22) Anmeldetag: 10.12.2008
(51) Int. Cl.: F02M 25/07, F02B 37/013, F02D 41/00

(54) **Zweistufiges Aufladesystem für Abgaszirkulation**

(71) Anmelder: ABB Turbo Systems AG, 5400 Baden (CH)
(72) Erfinder: Codan, Ennio, 5212 Hausen bei Brugg (CH); Fusstetter, Klaus, 5408 Ennetbaden (CH); Mutter, Alexander, 79733 Göhrwihl (DE); Bernasconi, Simone, 8050 Zürich (CH)
(74) Vertreter: ABB Patent Attorneys

(57) **Zusammenfassung**

Gemäß einem Ausführungsbeispiel der Erfindung ist ein Aufladesystem für einen Verbrennungsmotor angegeben, bei dem die Aufladung zweistufig gestaltet ist, wobei der AGR-Turbolader parallel zu den Hochdruckturboladern arbeitet. Die zweistufige Aufladung bringt eine Verbesserung des Aufladewirkungsgrades mit sich, wodurch der AGR-Verdichter eine höhere Druckdifferenz zu überwinden hat.

## Beschreibung

### Technisches Gebiet

Die Erfindung betrifft das Gebiet der aufgeladenen Brennkraftmaschinen. Insbesondere betrifft die Erfindung ein Aufladesystem für einen Verbrennungsmotor, eine Brennkraftmaschine mit einem solchen Aufladesystem, ein Fahrzeug mit einer solchen Brennkraftmaschine, ein Verfahren zum Aufladen eines Verbrennungsmotors mit einem Aufladesystem, ein Programmelement und ein computerlesbares Medium.

### Technologischer Hintergrund

Die Abgasrezirkulation (AGR) ist eine bekannte Methode zur Reduktion der NOx-Emissionen bei Verbrennungsmotoren. Bei aufgeladenen Motoren ist die Hochdruckvariante, d.h. die Entnahme von Abgas vor der Turbine des Turboladers und die Beimischung dem Gas nach dem Verdichter die energetisch günstigste Variante. Sie ist im Bereich der kleinen Motoren, insbesondere für PKW und LKW Anwendung, sehr verbreitet. Der Grund hierfür ist darin zu sehen, dass der Abgasdruck vor der Turbine in weiten Bereichen des Motorkennfeldes höher ist, als der Druck der Ladeluft nach dem Turboladerverdichter.

Bei Großmotoren ist dies nicht der Fall, da meistens durch hohe Wirkungsgrade der Aufladung eine positive Druckdifferenz zwischen den Bedingungen vor und nach dem Zylinder erzeugt wird. Dies ist für den Motorbetrieb erwünscht, da dadurch die Spülung des Brennraums möglich wird und die Ladungswechselarbeit reduziert wird. Die positive Druckdifferenz macht die AGR ohne zusätzliche Maßnahmen unmöglich. Das Problem kann dadurch gelöst werden, dass ein Gebläse für die Druckerhöhung des Gases verwendet wird (US5657630A1). Diese Lösung erfüllt die Aufgabe, hat aber die Nachteile, dass das Gebläse mit elektrischem oder mechanischem Antrieb sehr gross wird und eine nicht unerhebliche Antriebsleistung verbraucht, was sich negativ auf die Energiebilanz des Gesamtsystems bewirkt.

Aus DE 44 36 732 A1 ist eine andere Lösung bekannt, in welcher das Gebläse durch eine Gasturbine angetrieben wird. Die Maschine für die AGR sieht dann wie ein Turbolader aus, obwohl spezielle Komponenten zur Anwendung kommen. Diese Lösung wurde in einem Forschungsprojekt untersucht und hat sich als beste thermodynamische Variante erwiesen (CIMAC Paper: H. Stebler et al. "Reduction of NOx-emissions of a medium-speed d.i. diesel engine using miller system, exhaust gas recirculation, variable nozzle turbo charger and common rail fuel injection - Kopenhagen 1998).

Ein großes Problem dieses Rezikulationsturboladers liegt darin, dass der Verdichter einen relativ großen Massenstrom mit sehr kleinem Druckverhältnis und die Turbine einen möglichst kleinen Massenstrom mit großem Expansionsverhältnis verarbeiten müssen.

Dies führt zu einer Fehlanpassung (einem Mismatching) der Komponenten. Mit einem für Turbolader normalen Durchmesserverhältnis

D_{T}/D_{V}≈0.9 (D_{T} = Turbinendurchmesser, D_{V} = Verdichterdurchmesser) würde sich eine Laufzahl der Turbine kleiner als 0.2 ergeben. Die Turbinenlaufzahl ist das Verhältnis zwischen der Umfangsgeschwindigkeit u_{T} der Turbine und der isentropen Geschwindigkeit c0, welche dem vorhandenen Enthalpiegefälle entspricht. Diese Laufzahl sollte für einen optimalen Turbinenwirkungsgrad ungefähr 0.7 betragen. Bei dem Wert unter 0.2 wird der Turbinenwirkungsgrad sehr tief. Die Situation kann durch eine Erhöhung des Verhältnisses D_{T}/D_{V} verbessert werden. Dies hat aber auch Grenzen: Die Reduktion des Verdichterdurchmessers führt zu sehr großen Werten des spezifischen Schluckvermögens des Verdichters V/Dᵥ², mit V = Volumenstrom.

Die Erhöhung des Turbinendurchmessers führ zu sehr niedrigen Werten des spezifischen Schluckvermögens der Turbine S_{eff}/D_{T}², mit S_{eff} = effektive Fläche der zur Turbine äquivalenten Düse.

In beiden Fällen wird der erreichbare Wirkungsgrad der Komponenten (Verdichter bzw. Turbine) reduziert.

Aus DE 44 36 732 A1 ist eine andere Verbesserung bekannt: Wenn zwei AGR-Turbolader verwendet werden und die Turbinen in Serie angeordnet sind, während die Verdichter parallel arbeiten, entschärft sich teilweise das Problem vom Mismatching (die Laufzahl der Turbinen wird verdoppelt).

### Zusammenfassung der Erfindung

Es ist eine Aufgabe der Erfindung, eine verbesserte Aufladung von Verbrennungsmotoren bereitzustellen.

Es sind ein Aufladesystem für einen Verbrennungsmotor, eine Brennkraftmaschine, ein Fahrzeug, ein Verfahren, ein Programmelement und ein computerlesbares Medium gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen das Aufladesystem, die Brennkraftmaschine, das Fahrzeug, das Verfahren, das Programmelement und das computerlesbares Medium. In anderen Worten lassen sich die im Folgenden beispielsweise im Hinblick auf das Aufladesystem, die Brennkraftmaschine oder das Fahrzeug beschriebenen Merkmale auch in dem Verfahren, dem Programmelement und dem computerlesbaren Medium implementieren, und umgekehrt.

Gemäß einem Ausführungsbeispiel der Erfindung ist ein Aufladesystem für einen Verbrennungsmotor angegeben, welches einen ersten Turbolader, einen zweiten Turbolader und einen Rezirkulationspfad aufweist. Der erste Turbolader weist eine erste Turbine und einen ersten Verdichter auf und der zweite Turbolader weist eine zweite Turbine und einen zweiten Verdichter auf. Der Rezirkulationspfad dient der Rezirkulation von Abgas des Verbrennungsmotors von dem Auslass bzw. Auslassreceiver des Verbrennungsmotors zu einem Einlass bzw. Einlassreceiver des Verbrennungsmotors. Weiterhin ist ein Abgasverdichter im Rezirkulationspfad angeordnet, welcher einer Druckerhöhung des Abgases dient, bevor es dem Einlass des Verbrennungsmotors wieder zugeführt wird. Die beiden Turbolader sind seriell zueinander geschaltet.

Gemäß einem weiteren Ausführungsbeispiel der Erfindung weist das Aufladesystem weiterhin eine dritte Turbine zum Antreiben des Abgasverdichters auf, wobei die dritte Turbine parallel zu der zweiten Turbine des zweiten Turboladers geschaltet ist und ein aus der dritten Turbine austretender Abgasstrom der ersten Turbine des ersten Turboladers zugeführt ist.

In anderen Worten wird die Aufladung 2-stufig gestaltet wobei der AGR-Turbolader parallel zu den Hochdruckturboladern arbeitet. Die 2-stufige Aufladung bringt eine Verbesserung des Aufladewirkungsgrades mit sich, was auch den Nebeneffekt hat, dass der AGR-Verdichter eine höhere Druckdifferenz zu überwinden hat.

Gemäß einem weiteren Ausführungsbeispiel der Erfindung ist der Abgasverdichter der zweite Verdichter des zweiten Turboladers.

Gemäß diesem Ausführungsbeispiel der Erfindung wird die AGR-Strömung von dem Auslassreceiver entnommen und nach einer Konditionierung (Kühlung, Reinigung, Filtrierung,...) vor dem Eintritt in den Hochdruckverdichter der Hauptströmung beigemischt.

Gemäß einem weiteren Ausführungsbeispiel der Erfindung weist das Aufladesystem eine dritte Turbine zum Antreiben des Abgasverdichters auf, wobei die dritte Turbine in dem Rezirkulationspfad angeordnet ist.

Gemäß diesem Ausführungsbeispiel der Erfindung wird der AGR-Turbolader kurzgeschlossen. Die AGR-Strömung wird zu nächst in die Turbine des Rezirkulationsladers expandiert, danach erfolgt die Konditionierung (Kühlung, Reinigung, Filtrierung,...) und anschließend die Verdichtung im Verdichter des Rezirkulationsladers.

Gemäß einem weiteren Ausführungsbeispiel der Erfindung weist das Aufladesystem weiterhin eine Nutzturbine auf, die in den Rezirkulationspfad integriert ist.

Gemäß einem weiteren Ausführungsbeispiel der Erfindung weist zumindest eine der Turbinen eine variable, regelbare Strömungsfläche auf.

Beispielsweise weist die Nutzturbine eine variable Strömungsfläche auf. Weiterhin ist, gemäß einem weiteren Ausführungsbeispiel der Erfindung, eine Verbindung zwischen dem Austritt der AGR-Turbine und dem Austritt vom System zur Regelung der Turbinenleistung vorgesehen. Die Regelung erfolgt über einen entsprechenden Regler.

Gemäß einem weiteren Ausführungsbeispiel der Erfindung arbeiten mindestens zwei Turbolader als Niederdruckstufen parallel zueinander.

Gemäß einem weiteren Ausführungsbeispiel der Erfindung weist hierbei mindestens einer der Niederdruckturbolader eine Kapazität auf, die in etwa der AGR-Rate entspricht, und durch Ventile abschaltbar ist.

Gemäß einem weiteren Ausführungsbeispiel der Erfindung sind die Ventilsteuerzeiten des Verbrennungsmotors variabel. Gemäß einem weiteren Ausführungsbeispiel der Erfindung wird durch die variablen Ventilsteuerzeiten des Verbrennungsmotors im Betrieb mit AGR ein kleinerer Millereffekt als im Betrieb ohne AGR erzielt.

Gemäß einem weiteren Ausführungsbeispiel der Erfindung ist das System derart ausgeführt, dass durch die variablen Ventilsteuerzeiten des Verbrennungsmotors im Betrieb mit AGR ein höherer Luftdurchsatz, also eine erhöhte Spülung, als im Betrieb ohne AGR erzielt wird.

Gemäß einem weiteren Ausführungsbeispiel der Erfindung weist das Aufladesystem weiterhin eine erste variable Bypassleitung zur Verbindung eines Austritts des zweiten Verdichters mit einem Eintritt der zweiten Turbine auf.

Gemäß einem weiteren Ausführungsbeispiel der Erfindung weist das Aufladesystem weiterhin eine zweite variable Bypassleitung zur Verbindung des Austritts des zweiten Verdichters mit einem Eintritt der ersten Turbine auf.

Gemäß einem weiteren Ausführungsbeispiel der Erfindung weist das Aufladesystem eine dritte variable Bypassleitung zur Verbindung eines Austritts des ersten Verdichters mit einem Eintritt der ersten Turbine auf.

Gemäß einem weiteren Ausführungsbeispiel der Erfindung weist das Aufladesystem eine vierte variable Bypassleitung zur Verbindung des Eintritts der zweiten Turbine mit einem Austritt der zweiten Turbine auf.

Gemäß einem weiteren Ausführungsbeispiel der Erfindung weist das Aufladesystem eine fünfte variable Bypassleitung zur Verbindung des Eintritts der zweiten Turbine mit einem Austritt des Aufladesystems auf.

Gemäß einem weiteren Ausführungsbeispiel der Erfindung weist das Aufladesystem eine sechste variable Bypassleitung zur Verbindung des Eintritts der ersten Turbine mit einem Austritt des Aufladesystems auf.

Es ist zu beachten, dass die verschiedenen variablen Bypassleitungen einzeln oder in verschiedenen Kombinationen miteinander vorgesehen sein können. Zur Variierung der Bypassleitungen sind entsprechende Steuerventile oder Regelventile in, vor oder nach den Bypassleitungen vorgesehen.

Gemäß einem weiteren Ausführungsbeispiel der Erfindung weist der Niederdruckverdichter (erster Verdichter) einen variablen Diffusor auf.

Gemäß einem weiteren Ausführungsbeispiel der Erfindung weist der Niederdruckverdichter eine regelbare Einrichtung zum Erzeugen von Vordrall auf.

Gemäß einem weiteren Ausführungsbeispiel der Erfindung weist die Turbine des Rezirkulationsladers (dritte Turbine) eine regelbare Strömungsfläche auf.

Gemäß einem weiteren Ausführungsbeispiel der Erfindung weist die Hochdruckturbine eine regelbare Strömungsfläche auf und gemäß einem weiteren Ausführungsbeispiel der Erfindung weist die Niederdruckturbine eine regelbare Strömungsfläche auf.

Gemäß einem weiteren Ausführungsbeispiel der Erfindung wird die Gasströmung in der vierten Bypassleitung in einer Nutzturbine expandiert.

Gemäß einem weiteren Ausführungsbeispiel der Erfindung weist diese Nutzturbine eine variable Strömungsfläche auf.

Gemäß einem weiteren Ausführungsbeispiel der Erfindung wird die Gasströmung in der fünften Bypassleitung in einer Nutzturbine expandiert.

Gemäß einem weiteren Ausführungsbeispiel der Erfindung weist diese Nutzturbine eine variable Strömungsfläche auf.

Gemäß einem weiteren Ausführungsbeispiel der Erfindung wird die Gasströmung in der sechsten Bypassleitung in einer Nutzturbine expandiert.

Gemäß einem weiteren Ausführungsbeispiel der Erfindung weist auch diese Nutzturbine eine variable Strömungsfläche auf.

Gemäß einem weiteren Ausführungsbeispiel der Erfindung weist der Hochdruckturbolader (zweiter Turbolader) einen mechanischen Anschluss zur Leistungsübertragung (Power Take-in/Power Take-out) auf.

Gemäß einem weiteren Ausführungsbeispiel der Erfindung weist der Niederdruckturbolader (erster Turbolader) einen mechanischen Anschluss zur Leistungsübertragung (Power Take-in/Power Take-out) auf.

Gemäß einem weiteren Ausführungsbeispiel der Erfindung ist eine Brennkraftmaschine mit einem oben beschriebenen Aufladesystem angegeben. Bei dieser Brennkraftmaschine handelt es sich insbesondere um einen großen Motor, der beispielsweise zum Antrieb eines Schiffes oder einer Lokomotive oder aber auch zur stationären Stromerzeugung in einem Kraftwerk verwendet wird.

Gemäß einem weiteren Ausführungsbeispiel der Erfindung ist ein Fahrzeug mit einer oben beschriebenen Brennkraftmaschine zum Antrieb des Fahrzeugs angegeben.

Bei dem Fahrzeug handelt es sich beispielsweise um ein Schiff, eine Lokomotive oder aber auch ein schweres Straßenfahrzeug.

Gemäß einem weiteren Ausführungsbeispiel der Erfindung ist ein Verfahren zum Aufladen eines Verbrennungsmotors mit einem Aufladesystem (wie oben beschrieben) angegeben, bei dem der Verbrennungsmotor durch zwei seriell angeordnete Turbolader zweistufig aufgeladen wird. Weiterhin erfolgt eine Rezirkulation von Abgas des Verbrennungsmotors von einem Auslass des Verbrennungsmotors durch einen Rezirkulationspfad zu einem Einlass des Verbrennungsmotors. Außerdem wird ein Verdichter angetrieben, der in dem Rezirkulationspfad angeordnet ist. Das Antreiben des Verdichters erfolgt durch eine Turbine. Durch den Verdichter wird der Druck des Abgases beim Rezirkulieren erhöht.

Gemäß einem weiteren Ausführungsbeispiel der Erfindung erfolgt weiterhin ein Regeln der Leistung einer oder mehrerer der Turbinen auf Basis einer Verbindung zwischen einem Austritt der Turbine und einem Austritt des Aufladesystems.

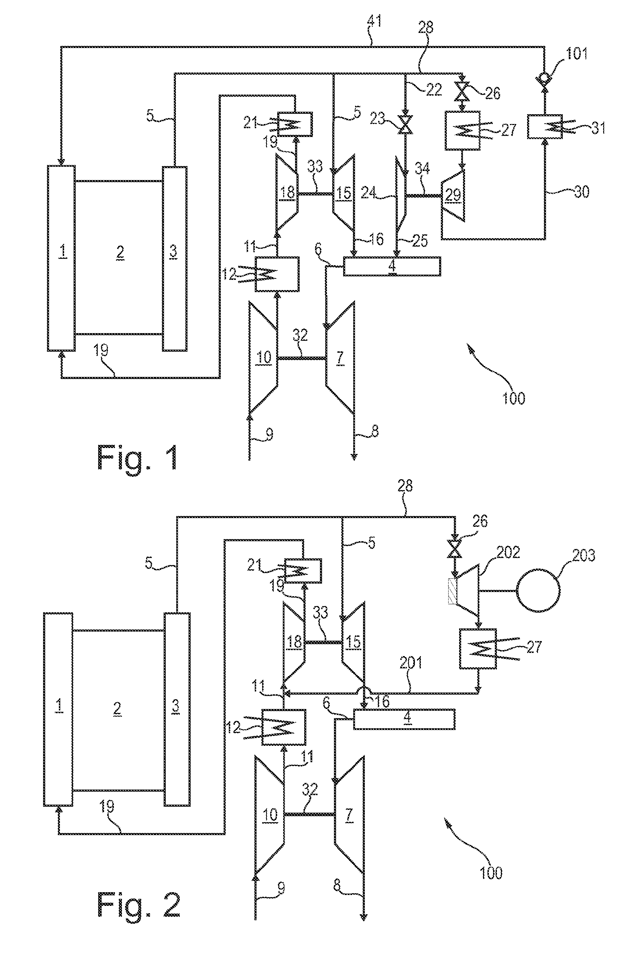

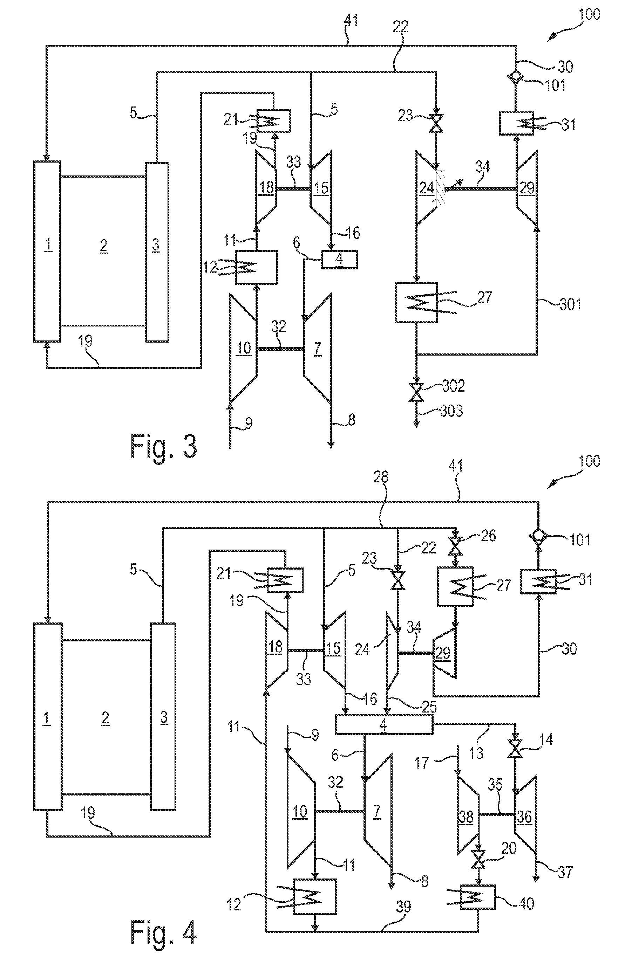

Zielgrößen für die Regelung des Aufladesystems sind:
- Die AGR-Menge:
   Die AGR-Menge kann praktisch in allen Fällen durch das Regelventil 23 bzw. durch die Fläche der Turbine 24 erfolgen (der Massenstrom durch die Turbine bestimmt die Turbinenleistung. Hieraus ergibt sich die Verdichterleistung und daraus dann die rezirkulierte Abgasmenge).
   Ausnahmen: System von Fig. 2. Die Regelung erfolgt hier durch das Ventil 26, eventuell durch die Nutzturbinenfläche 202. System von Fig. 3: Hier wird das Ventil 302 gebraucht, eventuell nur in der Startphase.
- Ladedruck (Druck im Abgasreceiver 1):
   Der Ladedruck kann durch die Registeraufladung, durch die variablen Strömungsflachen der Turbinen (7 und 15) oder durch die verschiedenen Wastegate bzw. Nutzturbinenvarianten beeinflusst bzw. geregelt werden.
- Lage im Verdichterkennfeld:
   Die Lage des Betriebspunktes im Verdichterkennfeld kann durch Registeraufladung, Ventilsteuerzeiten, variable Verdichtergeometrie, Bypassventile beeinflusst bzw. geregelt werden.
   Die beiden obigen Größen sind nicht unabhängig; Die Verschiebung der Betriebspunkte gibt eine Variation von Ladedruck, die Variations des Ladedrucks, insbesondere durch Änderung der Druckaufteilung zwischen den Stufen, bewirkt eine Verschiebung in den Kennfeldern.
- Zylinderfüllung (das Luftverhältnis und der Kompressionsdruck wirken sich auf den maximalen Zylinderdruck bei konstanter Einspritzung aus).
   Die Zylinderfülllung kann in erster Linie durch die variablen Steuerzeiten variiert werden.

Beispielsweise können bei Regelung aller vier genannten Regelgrößen die vier Regelkreise getrennt sein und es kann eine reine an/aus Steuerung für eine oder einige dieser Größen vorgesehen sein.

Gemäß einem weiteren Ausführungsbeispiel der Erfindung ist ein Programmelement angegeben, das, wenn es auf einem Prozessor ausgeführt wird, den Prozessor anleitet, die oben angegebenen Verfahrensschritte durchzuführen.

Dabei kann das Computerprogrammelement zum Beispiel Teil einer Software sein, die auf einem Prozessor des Fahrzeugmanagements gespeichert ist. Der Prozessor kann dabei ebenso Gegenstand der Erfindung sein. Weiterhin umfasst dieses Ausführungsbeispiel der Erfindung ein Computerprogrammelement, welches schon von Anfang an die Erfindung verwendet, so wie auch ein Computerprogrammelement, welches durch eine Aktualisierung (update) ein bestehendes Programm zur Verwendung der Erfindung veranlasst.

Gemäß einem weiteren Ausführungsbeispiel der Erfindung ist ein computerlesbares Medium angegeben, auf dem ein Programmelement gespeichert ist, das, wenn es auf einem Prozessor ausgeführt wird, den Prozessor anleitet, die oben angegebenen Verfahrensschritte auszuführen.

Im Folgenden werden mit Verweis auf die Figuren Ausführungsbeispiele der Erfindung beschrieben.

Kurze Beschreibung der Figuren
Fig. 1 zeigt ein Aufladesystem mit einem AGR-Turbolader parallel zum Hochdrucklader gemäß einem Ausführungsbeispiel der Erfindung.
Fig. 2 zeigt ein Aufladesystem mit AGR-Verdichtung im Hochdruckverdichter gemäß einem weiteren Ausführungsbeispiel der Erfindung.
Fig. 3 zeigt ein Aufladesystem mit einem kurzgeschlossenen AGR-Turbolader parallel zum Hochdrucklader gemäß einem weiteren Ausführungsbeispiel der Erfindung.
Fig. 4 zeigt ein Aufladesystem gemäß einem weiteren Ausführungsbeispiel der Erfindung mit einem AGR-Turbolader parallel zum Hochdrucklader, wobei der ND-Lader in Registerschaltung ist.
Fig. 5 zeigt ein Aufladesystem gemäß einem weiteren Ausführungsbeispiel der Erfindung mit einem AGR-Turbolader parallel zum Hochdrucklader mit ersten Regelmöglichkeiten.
Fig. 6 zeigt ein Aufladesystem gemäß einem weiteren Ausführungsbeispiel der Erfindung mit einem AGR-Turbolader parallel zum Hochdrucklader mit zweiten Regelmöglichkeiten.
Fig. 7 zeigt zwei Fahrzeuge gemäß Ausführungsbeispielen der Erfindung.
Fig. 8 zeigt ein Kraftwerk mit einem Verbrennungsmotor gemäß einem Ausführungsbeispiel der Erfindung.
Fig. 9 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

Fig. 1 zeigt ein Aufladesystem 100 mit einem AGR-Turbolader 24, 34, 29, der parallel zu einem Hochdrucklader 18, 33, 15 angeordnet ist.

Es ist ein Verbrennungsmotor 2 vorgesehen, der einen Lufteinlassreceiver 1 und einen Luftauslassreceiver bzw. Abgasreceiver 3 aufweist. Über die Leitung 5 ist eine Hochdruckgasturbine 15 des Hochdruckturboladers an den Auslassreceiver 3 angeschlossen. Parallel dazu sind über die Leitungen 5, 22 ein Steuerventil 23, über das die jeweilige Turbine ausgeschaltet oder geregelt werden kann, und eine Gasturbine 24 für den AGR-Verdichter 29 angeschlossen. Parallel dazu sind weiterhin der AGR-Verdichter 29 sowie ein vorgeschaltetes Modul 27 zum Reinigen und Kühlen des AGR-Gases an den Abgasreceiver 3 angeschlossen, dem wiederum ein weiteres Steuerventil 26 vorgeschaltet ist.

Der Abgasstrom wird also in drei Teilströme aufgeteilt. Der erste Teilstrom treibt die Hochdruckturbine 15 an und wird dann über die Leitung 16 einem zweiten Abgasreceiver (Mitteldruck) 4 zugeführt. Der zweite Teilstrom treibt die Rezirkulationsturbine 24 an und wird über die Leitung 25 ebenfalls dem zweiten Abgasreceiver zugeführt. Der dritte Teilstrom wird dem Verdichter 29 des AGR-Turboladers 24, 34, 29 zugeführt. Die Bezugszeichen 33 und 34 bezeichnen entsprechende Antriebswellen zwischen den jeweiligen Turbinen und Verdichtern.

Der verdichtete Abgasstrom wird über die Leitung 30 einem AGR-Kühler 31 zugeführt, der optional vorgesehen ist. Über die Leitung 41 wird der resultierende verdichtete Abgasstrom dem Luftreceiver 1 zugeführt. Für eine bessere Betriebssicherheit kann ein Rückschlagventil 101 in der Leitung 41 vorgesehen sein.

Aus dem zweiten Abgasreceiver 4 wird der Abgasstrom über die Leitung 6 der Niederdruckturbine 7 zugeführt und dann über die Leitung 8 nach außen abgegeben oder einem nachgeschalteten System, wie beispielsweise einem System zur Wärmerückgewinnung, zur Abgasnachbehandlung oder einem Kamin übergeben.

Über die Leitung 9 erfolgt ein Lufteintritt in das System. Die Leitung 9 führt die Luft dem Niederdruckverdichter 10 zu, der über die Verbindungswelle 32 mit der Niederdruckturbine 7 verbunden ist. Über die Leitung 11 wird die vom Verdichter 10 ausgestoßene Luft an einen Luftkühler 12 übergeben, der die gekühlte resultierende Luft über die Leitung 11 dem Hochdruckverdichter 18 übergibt. Die vom Hochdruckverdichter 18 ausgelassene Luft wird über die Leitung 19 einem weiteren Luftkühler 21 übergeben und dann über die Fortsetzung der Leitung 19 dem Luftreceiver 1 zugeführt.

Eine vorteilhafte Lösung des der Erfindung zugrunde liegenden Problems besteht darin, die Aufladung 2-stufig zu gestalten und den AGR-Turbolader parallel zu den Hochdruckturboladern arbeiten zu lassen. Die 2-stufige Aufladung bringt eine Verbesserung des Aufladewirkungsgrades mit sich, was auch den Nebeneffekt hat, dass der AGR-Verdichter eine höhere Druckdifferenz zu überwinden hat.

Andererseits arbeitet die AGR-Turbine mit einem tieferen Expansionsverhältnis, da sie das Gas nur vom Druck in Abgasreceiver bis zum Druck am Eintritt der Niederdruckturbinen expandiert.

Beide Effekte führen dazu, dass die Massenströme verdichterseitig und turbinenseitig in einem günstigeren Verhältnis zu liegen kommen und demzufolge die Laufzahl der Turbine ebenfalls gegen den optimalen Bereich steigt.

Ein zusätzlicher Vorteil besteht darin, dass die verbleibende Energie des Gases, welches zum Antrieb der AGR-Turbine benutzt wird, in die Niederdruck-Turbine (ND-Turbine) weiterhin nutzbar bleibt.

Das System erlaubt, den Motor mit hohen AGR-Raten zu betreiben und trotzdem hohe Wirkungsgrade der Aufladung und des Motors zu behalten. Dies erfolgt Dank der guten Wirkungsgrade der 2-stufige Aufladung und des guten Wirkungsgrades des Rezirkulationsladers. Auch die Kosten für den Rezirkulationslader können reduziert werden, weil durch die Entschärfung der Laufzahlproblematik bereits bekannte Komponenten zur Anwendung kommen könnten, während im Falle der 1-stufigen Aufladung Neuentwicklungen mit extremen Zielwerten notwendig wären.

Die Vorteile der 2-stufige Aufladung im Vergleich zur 1-stufigen brauchen hier nicht besonders erläutert zu werden. Die 2-stufige Aufladung mit Zwischenkühlung erlaubt deutlich höhere Druckverhältnisse der Aufladung mit deutlich höheren Wirkungsgraden zu erreichen. Für den Motor heißt dies generell höhere Wirkungsgrade aber auch Potential für Leistungserhöhung, Emissionsminderung speziell durch den Millerprozess und höhere Flexibilität für die Regelung. Alle diese Vorteile werden mit dem vorgeschlagenen System zugänglich.

Fig. 2 zeigt ein Aufladesystem 100 mit einer AGR-Verdichtung im Hochdruckverdichter 18. Es ist eine Leitung 28 vorgesehen, die einen Teil des Abgasstroms aus dem Abgasreceiver 3 über ein Ventil 26 zum Ausschalten des AGR-Pfads einer Nutzturbine 202 zuführt. Von der Nutzturbine 202 gelangt der Abgasstrom dann zu einem Reinigungsmodul 27, welches auch zur Kühlung des AGR-Gases eingesetzt wird. Daraufhin gelangt das gereinigte und gekühlte Abgas über die Leitung 201 und die Leitung 11 zum Hochdruckverdichter 18.

In diesem Ausführungsbeispiel der Erfindung wird der Verdichter des Hochdruckladers zusätzlich als Verdichter für die Rezirkulationsströmung verwendet. Die AGR-Strömung wird von dem Auslassreceiver entnommen und nach der Konditionierung (Kühlung, Reinigung, Filtrierung,...) vor dem Eintritt des Hochdruckverdichters mit der Hauptströmung beigemischt. Der Vorteil dieser Ausführung ist das der AGR-Turbolader eliminiert wird und dadurch das System einfacher wird. Die Nutzturbine ist für die Funktion dieser Ausführung nicht essentiell. In einer vereinfachten Ausführung, ohne Nutzturbine, bleibt die Expansionsenergie des AGR-Gases vom Eintrittsdruck der Hochdruckturbine zum Eintrittsdruck des Hochdruckverdichters ungenutzt: das Gas wird nur im Ventil 26 gedrosselt. Bei sehr großen Motoren kann diese Expansionsenergie nicht unerheblich sein, deshalb stellt sich die Integration einer Nutzturbine in den AGR-Pfad als interessante Option dar. Zur besseren Regelbarkeit des Systems ist es auch von Vorteil, wenn die Nutzturbine eine variable Strömungsfläche aufweist.

Fig. 3 zeigt ein Aufladesystem 100 mit einem kurzgeschlossenen AGR-Turbolader parallel zu dem Hochdrucklader 18, 33, 15. Der durch das Modul 27 (bei dem es sich beispielsweise um einen sog. Scrubber, Kühler oder Wärmetauscher handelt) gereinigte und gekühlte AGR-Gasstrom wird über die Leitung 301 dem Verdichter 29 zugeführt. Gleichzeitig kann ein Teil des Abgasstroms über das Ventil 302 nach außen oder einem angeschlossenen, nachgeschalteten System zugeführt werden.

In diesem Ausführungsbeispiel der Erfindung wird der Rezirkulationsturbolader kurzgeschlossen. Die AGR-Strömung wird zu nächst in die Turbine des Rezirkulationsladers expandiert, danach erfolgt die Konditionierung (Kühlung, Reinigung, Filtrierung,...) und anschließend die Verdichtung im Verdichter des Rezirkulationsladers. Diese Ausführung verlangt ein höheres Druckverhältnis des AGR-Verdichters, dafür kann die Gasströmung zum Antrieb der AGR-Turbine erspart werden. Zum starten der Maschine und zur Leistungsregelung ist es opportun die Möglichkeit vorzusehen, den Massenstrom der Turbine durch ein regelbares Ausblasventil 302 zu erhöhen.

Es gibt Anwendungsfälle, wie zum Beispiel für Schiffsmotoren, wo es von Vorteil ist, den Motor auch ohne AGR zu betreiben. In dem Fall kann der Hochdruckturbolader problemlos weiter fahren. Der Niederdrucklader würde aber eine große Verschiebung des Betriebspunktes im Verdichterkennfeld erleben. Um die Wirkungsgradverluste des Verdichters in Grenzen zu halten ist eine Auslegung bei sehr moderaten Druckverhältnissen für den Niederdrucklader vorgesehen, damit genügend Kennfeldbreite noch vorhanden ist.

Um den Motorbetrieb mit und ohne AGR zu ermöglichen, ist eine zusätzliche Variabilität im Aufladesystem vorhanden.

Eine erste Möglichkeit besteht darin, die gesamte Kapazität zwischen mehreren Niederdruckturboladern aufzuteilen. Einer von den Niederdruckturboladern weist eine Kapazität auf, die in etwa der AGR-Rate entspricht, und ist in Registerschaltung nur aktiv, wenn die AGR ausgeschaltet wird. In diesem Fall kann die Aufladung vergleichbare Werte von Ladedruck und Wirkungsgrad in beiden Betriebsmodi liefern.

Eine weitere Möglichkeit ist, die Ventilsteuerzeiten des Motors variabel zu gestalten. Viele moderne Motoren werden mit dem sogenannten Millerprozess betrieben. Bei 4-Taktmotoren kann dies durch einen Schließen des Einlassventils früher oder später als der Winkel mit optimaler Füllung erreicht werden, damit der Zylinder deutlich weniger Ladung bekommt, als die der Dichte im Einlassreceiver und dem Hubvolumen entsprechende Masse. Bei 2-Taktmotoren kann dies durch einen späteren Schließen des Auslassventils produziert werden. Besonders vorteilhaft ist, wenn der Millereffekt im Betrieb mit AGR geringer ausfällt als im Betrieb ohne AGR. Dadurch kann die Verschiebung des Betriebspunktes im Verdichterkennfeld reduziert werden. Die Reduktion der Füllung im Betrieb ohne AGR erlaubt auch, die Erhöhung von Luftverhältnis und maximalem Zylinderdruck durch den höheren Ladedruck zu reduzieren. Insbesondere bei 4-Taktmotoren kann durch die Variation der Ventilüberschneidung die Durchlässigkeit des Motors, d.h. der Zusammenhang zwischen Ladedruck und Durchsatz, noch weiter beeinflusst werden.

Die Strömungsflächen der Turbinen sind so ausgelegt, dass sie die Antriebsleistung den Verdichtern geben, um den geforderten Ladedruck im Betrieb mit AGR zu produzieren. Im Betrieb ohne AGR bekommen die Turbinen mehr Masse und produzieren dadurch viel mehr Leistung. Um diese Leistung zu reduzieren, gibt es verschiedene Möglichkeiten:
- Versehen der Hochdruckturbine mit variabler Strömungsfläche.
- Versehen der Niederdruckturbine mit variabler Strömungsfläche.
- Vorsehen eines Hochdruck-Wastegates, d.h. einer Bypassleitung um die Hochdruckturbine.
- Vorsehen eines Niederdruck-Wastegates, d.h. einer Bypassleitung um die Niederdruckturbine.
- Vorsehen eines System-Wastegates, d.h. einer Bypassleitung um beide Turbinen.

Die variable Turbinenfläche erlaubt, die Turbinenleistung mit den geringsten Wirkungsgradverlusten zu reduzieren. Diese Verluste sind höher mit dem Hochdruck-Wastegate und nochmals höher mit den anderen Wastegate-Varianten. Die überflüssige Abgasenergie im Betrieb ohne AGR kann in eine Nutzturbine umgesetzt werden, wenn diese Nutzturbine in eine Turbinenbypassleitung integriert wird. Zur besseren Regelbarkeit des Systems ist es auch von Vorteil, wenn die Nutzturbine eine variable Strömungsfläche aufweist. Alternativ kann die überflüssige Leistung direkt aus der Turboladerwelle entzogen werden (power take-out). Ist ein Anschluss zur Turboladerwelle vorhanden, kann er auch als power take-in benutzt werden, d.h. externe Leistung kann bei Bedarf eingespeist werden. Das Problem der Verschiebung der Betriebspunkte im Verdichterkennfeld kann wie folgt ausgedrückt werden:
Werden die Verdichter für den optimalen Betrieb mit AGR ausgelegt, arbeiten sie mit zu großem Volumenstrom und zu hohem Druck im Betrieb ohne AGR; Dies führt zu schlechteren Wirkungsgraden und ggf. zur Überschreitung der Schluckgrenze oder der Drehzahlgrenze des Verdichters.
Werden die Verdichter für den optimalen Betrieb ohne AGR ausgelegt, arbeiten sie mit zu kleinem Volumenstrom und zu kleinem Druck im Betrieb mit AGR; Dies kann zu Überschreitung der Pumpgrenze führen.

Eine Bypassleitung um den Motor kann helfen, das Pumpen zu vermeiden. Diese Bypassleitung kann als Verbindung dargestellt werden:
- Von dem Hochdruckverdichter zu der Hochdruckturbine (HD-Bypass).
- Von dem Niederdruckverdichter zu der Niederdruckturbine (ND-Bypass).
- Von dem Hochduckverdichter zu der Niederdruckturbine (HD/ND-Bypass).
   Die variable Verdichtergeometrie ist eine weitere Möglichkeit, den optimalen Betriebsbereich des Verdichters zu verschieben. Der Vorteil ist, dass im Vergleich mit den Bypass-Varianten weniger Energie für die Verdichtung aufzuwenden ist. Die Variabilität ist vorzugsweise auf den Niederdruckverdichter einzusetzen und kann wie folgt realisiert werden:
- Variable (drehbare) Diffusorschaufeln.
- Regelbare Einrichtung zur Erzeugung von Drall am Verdichtereintritt.

Fig. 4 zeigt ein Aufladesystem 100 mit einem AGR-Turbolader, der parallel zum Hochdrucklader geschaltet ist, wobei der Niederdruck-Lader 10, 32, 7 in Registerschaltung ausgeführt ist. An den zweiten Abgasreceiver 4 ist über die Leitung 13 und das Ventil 14 (zum Ausschalten der jeweiligen Kabine) eine Turbine 36 angeschlossen. Der abgegebene Gasstrom wird über die Leitung 37 an die Außenwelt oder ein nachgeschaltetes System abgegeben. Über die Welle 35 ist die Turbine 36 mit dem Verdichter 38 verbunden. Dem Verdichter 38 wird über die Leitung 17 Luft zugeführt, die beispielsweise von außen kommt. Die verdichtete Luft wird vom Verdichter 38 über das Ventil 20 dem Luftkühler 40 zugeführt und dann über die Leitung 39 und die Leitung 11 dem Hochdruckverdichter 18 zugeführt.

Die über den Luftkühler erzeugte gekühlte Luft des Niederdruckverdichters 10 wird ebenfalls über die Leitung 11 dem Hochdruckverdichter 18 zugeführt.

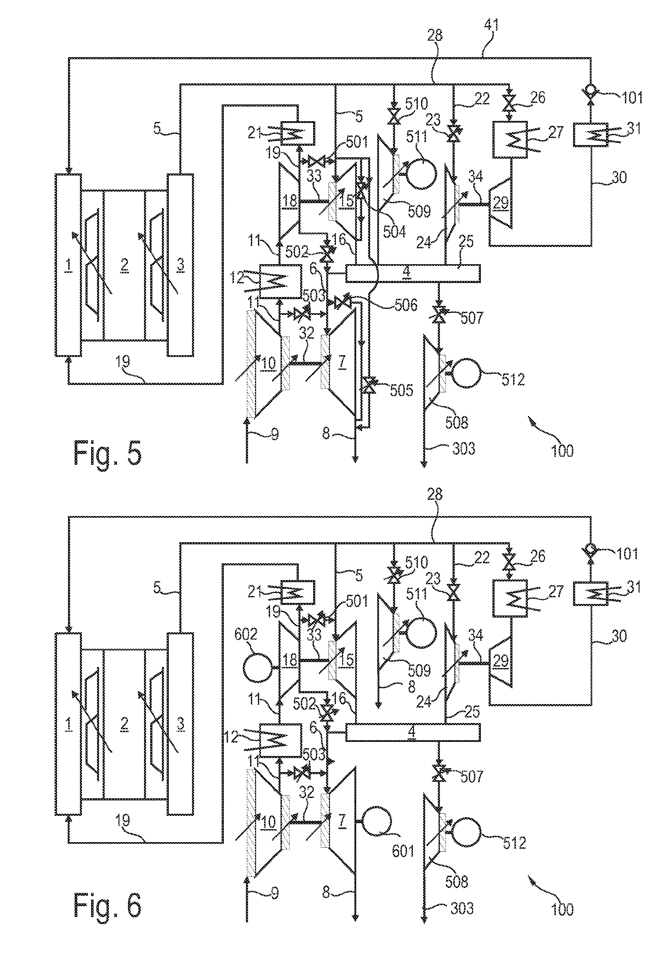

Fig. 5 zeigt ein Aufladesystem 100 mit einem AGR-Turbolader parallel zum Hochdrucklader mit ersten Regelmöglichkeiten. Es sind eine Vielzahl von variablen Bypassleitungen 501 bis 506 vorgesehen. Die Bypassleitung 501 ist zwischen dem Austritt des Hochdruckverdichters und dem Einlass der Hochdruckturbine 15 geschaltet. Die variable Bypassleitung 502 ist zwischen den Austritt des Hochdruckverdichters 18 und den Eingang der Niederdruckturbine 7 geschaltet. Die variable Bypassleitung 503 ist zwischen den Austritt des Niederdruckverdichters 10 und den Einlass der Niederdruckturbine 7 geschaltet. Die variable Bypassleitung 504 ist zwischen den Einlass der Hochdruckturbine 15 und ihrem Auslass geschaltet. Die variable Bypassleitung 505 ist zwischen den Einlass der Hochdruckturbine 15 und den Auslass der Niederdruckturbine 7 geschaltet. Die variable Bypassleitung 506 ist zwischen den Einlass der Niederdruckturbine und deren Auslass geschaltet. Die variablen Bypassleitungen weisen entsprechende Steuerventile auf.

Weiterhin ist ein Steuerventil 507 zwischen eine Nutzturbine 508 und den zweiten Abgasreceiver 4 geschaltet.

Eine zweite Nutzturbine 509 ist über die variable Leitung 510 mit einem entsprechenden Steuerventil an die Leitung 5 angeschlossen.

Die variablen Bypassleitungen 504 bis 506 sind optional, wenn die entsprechenden Nutzturbinen installiert sind.

Fig. 6 zeigt ein Aufladesystem 100 mit einem AGR-Turbolader parallel zum Hochdrucklader mit zweiten Regelmöglichkeiten. Beispielsweise wird die Luft von der Nutzturbine 509 nach außen (Systemaustritt) oder an ein nachgeschaltetes System abgeführt und nicht dem zweiten Abgasreceiver zugeführt. Die Bezugszeichen 601, 602 bezeichnen die Power take-in/Power take-out (PTI/PTO) Anschlüsse der beiden Turbolader 18, 33, 15 und 10, 32, 7.

Die Bezugszeichen 203, 511, 512, 601 und 602 in den Figuren 2, 5 und 6 bezeichnen jeweils einen Generator bzw. Motor/Generator. Es handelt sich um den Verbraucher für die Nutzturbine bzw. PTI/PTO, d.h. ein Generator bzw. elektrischer Motor/Generator, ein Getriebe zur Verbindung mit der Kurbelwelle des Motors, eine Pumpe bzw. eine hydraulische Pumpe/Turbine.

Das Bezugszeichen 303 in den Figuren 3, 5 und 6 bezeichnet einen Ausgang aus dem System, der nach Außen führt oder mit einem nachgeschalteten System verbunden ist.

Der Motor 2 weist in den Ausführungsbeispielen der Figuren 5 und 6 variable Steuerzeiten auf.

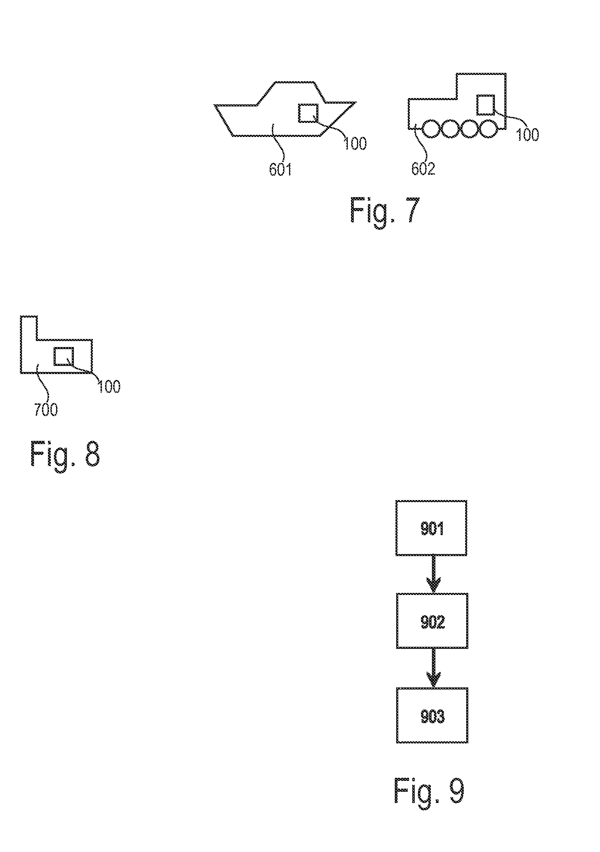

Fig. 7 zeigt zwei Fahrzeuge gemäß Ausführungsbeispielen der Erfindung. Bei dem ersten Fahrzeug 601 handelt es sich um ein Schiff und bei dem zweiten Fahrzeug 602 handelt es sich um eine Lokomotive, welche jeweils als Antrieb einen Großmotor mit einem erfindungsgemäßen Aufladesystem 100 aufweisen.

Fig. 8 zeigt ein Kraftwerk 700 mit einem Aufladesystem 100, welches für einen Kraftwerkgroßmotor vorgesehen ist.

Fig. 9 zeigt ein Flussdiagramm eines Verfahrens gemäß einem Ausführungsbeispiel der Erfindung.

In Schritt 901 erfolgt ein zweistufiges Aufladen des Verbrennungsmotors durch zwei seriell angeordnete Turbolader. Durch ein Antreiben eines Verdichters, der in dem Rezirkulationspfad angeordnet ist, durch eine Turbine in Schritt 902 erfolgt ein Rezirkulieren von Abgas des Verbrennungsmotors von einem Auslass des Verbrennungsmotors durch einen Rezirkulationspfad zu einem Einlass des Verbrennungsmotors und in Schritt 903 erfolgt ein Erhöhen eines Druckes des Abgases beim Rezirkulieren durch den Verdichter.

Von den beschriebenen Ausführungsbeispielen ist die Registerschaltung der Niederdruckverdichter besonders vorteilhaft. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Die Prioritätensetzung auf Systemwirkungsgrad oder auf Kosten oder Komplexität ist für die Wahl der jeweils geeigneten Lösung entscheidend.

Ergänzend sei darauf hingewiesen, dass "umfassend" und "aufweisend" keine anderen Elemente oder Schritte ausschließt und "eine" oder "ein" keine Vielzahl ausschließt. Bezugszeichen in den Ansprüchen sind nicht als Einschränkungen anzusehen.

### Bezugszeichenliste

- 1: Luftreceiver
- 2: Verbrennungsmotor
- 3: Abgasreceiver
- 4: 2. Abgasreceiver (Mitteldruck)
- 5,6, 13, 22: Verbindungen vom Abgasreceiver zu Turbineneintritt.
- 14, 23: Ventil zum Ausschalten der jeweiligen Turbine
- 7, 15, 24, 36: Gasturbine
- 8, 37, 303: Verbindung zum nachgeschalteten System (Wärmerückgewinnung, Abgasnachbehandlung, Kamin,...)
- 16, 25: Verbindung von Turbinenaustritt zum Mitteldruckabgasreceiver
- 9, 17: Lufteintritte in System
- 10, 18, 29, 38: Verdichter
- 19,: Verbindungen von Verdichteraustritt zum Luftreceiver
- 11, 39: Verbindungen von Verdichteraustritt zum Hochdruckverdichter
- 12,21,40: Luftkühler
- 20: Ventil zum ausschalten des Verdichters
- 26: Ventil zum Ausschalten des AGR Pfades
- 27: Modul zum Reinigen und Kühlen des AGR-Gases (Scrubber, Kühler, Wärmetauscher, ...)
- 28, 201: Verbindung vom Abgasreceiver zum AGR-Verdichter
- 30, 41: Verbindung von AGR-Verdichter zum Luftreceiver
- 31: AGR Kühler (optional)
- 32, 33, 34,35: Turbolader bzw. Verbindungswelle zwischen Turbine und
- 202, 508, 509: Verdichter
- 501 bis 506: Nutzturbinen
- 507, 510: variable Bypassleitungen mit Ventilen
- 203, 511, 512,: variable Leitungen mit Ventilen
- 601 und 602: Generator bzw. Motor/Generator
- 101: Rückschlagventil
- 302: Regelventil

## Patentansprüche

1. Aufladesystem für einen Verbrennungsmotor, das Aufladesystem (100) aufweisend:
einen ersten Turbolader (7, 10) mit einer ersten Turbine (7) und einem ersten Verdichter (10);
einen zweiten Turbolader (15, 18) mit einer zweiten Turbine (15) und einem zweiten Verdichter (18);
einen Rezirkulationspfad (28, 30, 41, 201) zur Rezirkulation von Abgas des Verbrennungsmotors (2) von einem Auslass (3) des Verbrennungsmotors (2) zu einem Einlass (1) des Verbrennungsmotors (2);
einen Abgasverdichter (18, 29), der in dem Rezirkulationspfad (28, 30, 41, 201) angeordnet ist und welcher einer Druckerhöhung des Abgases dient;
wobei der erste Turbolader (7, 10) seriell zum zweiten Turbolader (15, 18) angeordnet ist.

2. Aufladesystem nach Anspruch 1, weiterhin aufweisend:
eine dritte Turbine (24) zum Antreiben des Abgasverdichters (29);
wobei die dritte Turbine (24) parallel zu der zweiten Turbine (15) des zweiten Turboladers (15, 18) geschaltet ist und ein aus der dritten Turbine (24) austretender Abgasstrom der ersten Turbine (7) des ersten Turboladers (7, 10) zugeführt ist.

3. Aufladesystem nach Anspruch 1,
wobei der Abgasverdichter (18) der zweite Verdichter (18) des zweiten Turboladers (15, 18) ist.

4. Aufladesystem nach Anspruch 1, weiterhin aufweisend:
eine dritte Turbine (24) zum Antreiben des Abgasverdichters (29);
wobei die dritte Turbine (24) in dem Rezirkulationspfad (28, 30, 41, 201) angeordnet ist.

5. Aufladesystem nach Anspruch 3, weiterhin aufweisend:
eine Nutzturbine (202), die in den Rezirkulationspfad (28, 30, 41, 201) integriert ist.

6. Aufladesystem nach einem der vorhergehenden Ansprüche, weiterhin aufweisend zumindest ein Element ausgewählt aus der Gruppe bestehend aus:
eine erste variable Bypassleitung (501) zur Verbindung eines Austritts des zweiten Verdichters (18) mit einem Eintritt der zweiten Turbine (15).
eine zweite variable Bypassleitung (502) zur Verbindung des Austritts des zweiten Verdichters (18) mit einem Eintritt der ersten Turbine (15).
einer dritten variable Bypassleitung (503) zur Verbindung eines Austritts des ersten Verdichters (10) mit einem Eintritt der ersten Turbine (7);
einer vierten variable Bypassleitung (504) zur Verbindung des Eintritts der zweiten Turbine (15) mit einem Austritt der zweiten Turbine (15).
einer fünften variable Bypassleitung (505) zur Verbindung des Eintritts der zweiten Turbine (15) mit einem Austritt (8) des Aufladesystems; und
einer sechsten variable Bypassleitung (506) zur Verbindung des Eintritts der ersten Turbine (7) mit einem Austritt (507) des Aufladesystems.

7. Aufladesystem nach einem der vorhergehenden Ansprüche, wobei die Ventilsteuerzeiten des Verbrennungsmotors variabel sind.

8. Aufladesystem nach einem der vorhergehenden Ansprüche, wobei zumindest einer der Turbolader oder eine Nutzturbine zumindest ein variables Element aufweist.

9. Aufladesystem nach einem der vorhergehenden Ansprüche, ausgeführt zur Registeraufladung.

10. Brennkraftmaschine mit einem Aufladesystem nach einem der Ansprüche 1 bis 9.

11. Fahrzeug mit einer Brennkraftmaschine nach Anspruch 12 zum Antrieb des Fahrzeugs.

12. Verfahren zum Aufladen eines Verbrennungsmotors mit einem Aufladesystem, das Verfahren aufweisend die Schritte:
zweistufiges Aufladen des Verbrennungsmotors (2) durch zwei seriell angeordnete Turbolader;
Rezirkulieren von Abgas des Verbrennungsmotors (2) von einem Auslass (3) des Verbrennungsmotors (2) durch einen Rezirkulationspfad zu einem Einlass (1) des Verbrennungsmotors (2);
Antreiben eines Verdichters, der in dem Rezirkulationspfad angeordnet ist, durch eine Turbine (7, 15, 24);
Erhöhen eines Druckes des Abgases beim Rezirkulieren durch den Verdichter.

13. Verfahren nach Anspruch 12, weiterhin aufweisend den Schritt:
Regeln einer Abgasmenge durch den Rezirkulationspfad und/oder eines Ladedrucks im Abgasreceiver (1).

14. Programmelement, das, wenn es auf einem Prozessor zur Steuerung eines Aufladesystems nach einem der Ansprüche 1 bis 9 ausgeführt wird, den Prozessor anleitet, die folgenden Schritte durchzuführen:
Regeln einer Abgasmenge durch den Rezirkulationspfad und/oder eines Ladedrucks im Abgasreceiver (1).

15. Computerlesbares Medium, auf dem ein Programmelement gespeichert ist, das, wenn es auf einem Prozessor zur Steuerung eines Aufladesystems nach einem der Ansprüche 1 bis 9 ausgeführt wird, den Prozessor anleitet, die folgenden Schritte durchzuführen:
Regeln einer Abgasmenge durch den Rezirkulationspfad und/oder eines Ladedrucks im Abgasreceiver (1).
